(19) Europäisches Patentamt
European Patent Office
Office européen des brevets

(11) **EP 4 730 405 A1**

(12) **EUROPEAN PATENT APPLICATION**
published in accordance with Art. 153(4) EPC

(43) Date of publication:
**22.04.2026 Bulletin 2026/17**

(21) Application number: **24865722.3**

(22) Date of filing: **26.08.2024**

(51) International Patent Classification (IPC):
*H01M 4/04* $^{(2006.01)}$     *G01B 21/16* $^{(2006.01)}$
*G01L 1/22* $^{(2006.01)}$

(52) Cooperative Patent Classification (CPC):
**G01B 21/16; G01L 1/22; H01M 4/04;** Y02E 60/10

(86) International application number:
**PCT/KR2024/012715**

(87) International publication number:
**WO 2025/058281 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.09.2023 KR 20230123278**

(71) Applicant: **LG Energy Solution, Ltd.
Seoul 07335 (KR)**

(72) Inventors:
• **KIM, Doyul
Daejeon 34122 (KR)**
• **YOON, Seog Jin
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **BATTERY MANUFACTURING DEVICE AND BATTERY MANUFACTURING METHOD USING SAME**

(57)     A battery cell manufacturing device according to an embodiment of the present disclosure may include: a first pressure roll that rotates around a first rotation shaft, a second pressure roll that forms a rolling interval through which a substrate passes together with the first pressure roll, and rotates around a second rotation shaft, a first sensor that measures a thickness of a substrate, and a second sensor that measures a load of at least one shaft of the first rotation shaft connected to the first pressure roll and the second rotation shaft connected to the second pressure roll.

[FIG. 2]

EP 4 730 405 A1

**Description**

**[TECHNICAL FIELD]**

Cross Citation with Related Application(s)

This application claims priority from and the benefit of Korean Patent Application No. 10-2023-0123278 filed on September 15, 2023 with the Korean Intellectual Property Office, the disclosure of which is incorporated herein by reference in its entirety.

The present disclosure relates to a battery cell manufacturing device and a battery cell manufacturing method using the same, and more particularly, to a battery cell manufacturing device which can measure a thickness of a substrate while enabling reduction of a footprint occupied by a process equipment, and a battery cell manufacturing method using the same.

**[BACKGROUND]**

In modern society, as portable devices such as a mobile phone, a notebook computer, a camcorder and a digital camera, and energy storage systems(ESS) have been daily used, technologies of a field related therewith has been actively developed. In addition, as a secondary battery capable of being charged and discharged is used as a power source for an electric vehicle(EV), a hybrid electric vehicle(HEV), a plug-in hybrid electric vehicle(PHEV) and the like as a method for solving air pollution and the like caused by existing gasoline vehicles using fossil fuel, a necessity for the development of the secondary battery is increasing.

Secondary batteries currently on the market include a nickel cadmium battery, a nickel hydrogen battery, a nickel zinc battery, a lithium secondary battery, and the like, and among them, the lithium secondary battery has come into the spotlight because it has advantages, for example, being freely charged and discharged, and offering very low self-discharge rate and high energy density.

The manufacturing process of such a lithium secondary battery is roughly classified into an electrode process, an assembly process, and a formation process. The electrode process may be divided into an active material mixing process, an electrode coating process, a pressing process, a slitting process, a winding process, and the like. In particular, measuring the thickness of the electrode in the electrode process is a process required for the production reliability of the electrode.

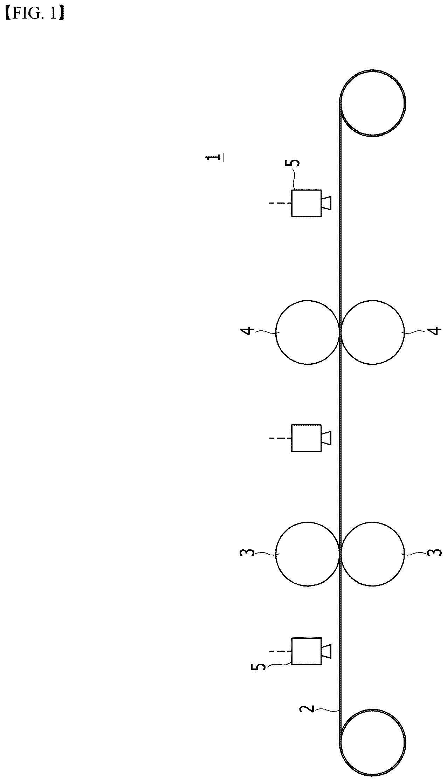

FIG. 1 is a conceptual diagram showing a battery cell manufacturing device according to a prior art technique.

Referring to FIG. 1, the battery cell manufacturing device 1 may include an electrode coating device 3, a rolling device 4, and an electrode thickness measuring device 5.

Generally, when manufacturing an electrode assembly of a secondary battery, a process of coating a positive electrode active material and a negative electrode active material onto a positive electrode current collector and a negative electrode current collector, respectively, is performed, and the secondary battery includes an electrode having an active material layer formed on the current collector. The positive electrode active material layer and the negative electrode active material layer need to be formed to a uniform thickness on the current collector in order to make the characteristics of the secondary battery uniform. The electrode coating device 3 is a device for uniformly coating the electrode active material onto the electrode current collector. The electrode coating device 3 discharges and applies an active material slurry onto the current collector being transported. The active material slurry discharged from the electrode coating device 3 is widely applied onto one surface of the current collector to form an active material layer.

The rolling device 4 is a device for compressing the electrode to a desired thickness by passing it between two pressure rolls heated to high temperature, in order to reduce the thickness of the electrode in which the coating process is completed to increase the capacity density and to increase the adhesion between the electrode current collector and the electrode active material,

The electrode thickness measuring device 5 is a device for measuring the thickness of the electrode 2. The electrode thickness measuring device 5 uses, for example, X-ray, b-ray, laser confocal, etc., or a method in which the tip physically contacts the electrode 2 to directly measure the thickness of the electrode 2 is used. However, this method has problems that due to differences in reflectance, absorption, and the like of the electrode 2, it is difficult to perform accurate measurements, or to maintain the zero point of the tip. Furthermore, since the thickness of the electrode 2 is measured during running of the electrode 2, there is a possibility that an error due to vibration may occur. For this reason, a problem may occur in the reliability of the thickness measurement of the electrode 2 via the electrode thickness measuring device 5.

Furthermore, the electrode thickness measuring device 5 may be arranged before or after passing the electrode coating device 3, the rolling device 4, and the like, in order to measure the thickness of the electrode 2 during running of the electrode 2. Therefore, the battery cell manufacturing device 1 needs to secure a space for installing the electrode thickness measuring device 5. This causes a problem that the footprint occupied by a process equipment such as the electrode thickness measuring device 5 increases.

**[DETAILED DESCRIPTION OF THE INVENTION]**

**[Technical Problem]**

It is an object of the present disclosure to provide a battery cell manufacturing device which can measure a thickness of a substrate while enabling reduction of a footprint occupied by a process equipment, and a battery cell manufacturing method using the same.

However, the problem to be solved by embodiments of the present disclosure is not limited to the above-described problems, and can be variously expanded within the scope of the technical idea included in the present disclosure.

**[Technical Solution]**

According to the present disclosure, provided herein is a battery cell manufacturing device comprising: a first pressure roll that rotates around a first rotation shaft, a second pressure roll that forms a rolling interval through which a substrate passes together with the first pressure roll, and rotates around a second rotation shaft, a first sensor that measures a thickness of a substrate passing between the first pressure roll and the second pressure roll, and a second sensor that measures a load of at least one shaft of the first rotation shaft connected to the first pressure roll and the second rotation shaft connected to the second pressure roll.

The thickness of the substrate is calculated from a difference between an interval between the first rotation shaft and the second rotation shaft and a sum of a thickness of the first pressure roll and a thickness of the second pressure roll.

The first sensor may be a distance measuring sensor that measures the interval between the first rotation shaft and the second rotation shaft in a noncontact manner.

The distance measuring sensor includes a first distance measuring sensor arranged on one side of any one of the first pressure roll and the second pressure roll, and a second distance measuring sensor arranged on the other side thereof, wherein a first interval between the first rotation shaft and the second rotation shaft is measured by the first distance measuring sensor, and a second interval between the first rotation shaft and the second rotation shaft is measured by the second distance measuring sensor, and the thickness of the substrate may be calculated by an average value of the first interval and the second interval.

The second sensor may be a load cell that measures the load of the rotation shaft connected to the pressure roll.

The load cell may include a pair of first load cells each arranged on both sides of the first rotation shaft of the first pressure roll, and a pair of second load cells each arranged on both sides of the second rotation shaft of the second pressure roll.

The battery cell manufacturing device may further comprise a processor that: compares a deviation of the load on both sides of the first rotation shaft measured by the pair of first load cells with a first reference value, and compares a deviation of the load on both sides of the second rotation shaft measured by the pair of second load cells with a second reference value.

The first reference value and the second reference value may be different from each other.

The processor may measure the thickness of the substrate by the first sensor, when the deviation of the load of the first rotation shaft and the deviation of the load of the second rotation shaft are respectively equal to or lower than the first reference value and the second reference value.

The processor may determine that an abnormality exists in the pressure roll in at least one of the following cases: when the deviation of the load of the first rotation shaft exceeds the first reference value, and when the deviation of the load of the second rotation shaft exceeds the second reference value.

The processor may output an alarm signal when it is determined that an abnormality exists in the pressure roll, and stop the operation of the pressure roll.

The substrate may include a current collector and an active material applied on one surface or both surfaces of the current collector.

Also provided herein is a battery cell manufacturing method using a battery cell manufacturing device which comprises: a first pressure roll that rotates around a first rotation shaft, and a second pressure roll that forms a rolling interval through which a substrate passes together with the first pressure roll, and rotates around a second rotation shaft, the method comprising the steps of: measuring a load of at least one of the first rotation shaft connected to the first pressure roll and the second rotation shaft connected to the second pressure roll, and measuring a thickness of the substrate.

The battery cell manufacturing method may further comprise: comparing a deviation of the load of the at least one rotation shaft with a predetermined reference value after measuring the load of the at least one rotation shaft.

The battery cell manufacturing method may measure the load on both sides of the at least one rotation shaft.

The battery cell manufacturing method may further comprise: outputting an alarm signal indicating that an abnormality exists in the pressure roll and stopping the operation of the pressure roll, when the deviation of the load of the at least one rotation shafts exceeds the predetermined reference value.

The battery cell manufacturing method may perform the step of measuring the thickness of the substrate when the deviation is equal to or lower than the predetermined reference value.

the step of measuring the thickness of the substrate may comprise: measuring an interval between the first rotation shaft and the second rotation shafter; and calculating a thickness of the substrate from a difference between an interval between the first rotation shaft and the second rotation shaft and a sum of a thickness of the first pressure roll and a thickness of the second pressure

roll.

**[Advantageous Effects]**

A battery cell manufacturing device according to an embodiment of the present disclosure does not need to ensure a space to install a measuring device for measuring the thickness of the substrate unlike a prior art technique, thereby enabling reduction of a footprint occupied by a process equipment. Furthermore, since the thickness of the substrate is not directly measured, errors due to the material of the substrate are not generated, and errors due to vibrations that occur according to running of the substrate can be reduced.

Furthermore, a battery cell manufacturing method according to an embodiment of the present disclosure can sense occurrence of an abnormality in the pressure roll during the battery cell manufacturing process. That is, since the battery cell manufacturing device measures the thickness of the substrate after determining whether an abnormality occurs in the condition of the pressure roll and/or the substrate, the reliability of thickness measurement of the substrate can be improved.

Effects of the present disclosure are not limited to the effects mentioned above, and additional other effects not mentioned herein will be clearly understood from the description of the appended claims by those skilled in the art.

**[BRIEF DESCRIPTION OF THE DRAWINGS]**

FIG. 1 is a conceptual diagram showing a battery cell manufacturing device according to a prior art technique.
FIG. 2 is a cross-sectional view of a battery cell manufacturing device according to an embodiment of the present disclosure.
FIG. 3 is a side view of a first pressure roll of the battery cell manufacturing device shown in FIG. 2.
FIG. 4 is a perspective view of the battery cell manufacturing device shown in FIG. 2.
FIG. 5 is a diagram illustrating an example in which an abnormality occurs in the load applied to a rotation shaft connected to a pressure roll.
FIG. 6 is a diagram showing another example in which an abnormality occurs in the load applied to a rotation shaft connected to a pressure roll.
FIG. 7 is a flowchart for explaining a battery cell manufacturing method using a battery cell manufacturing device according to an embodiment of the present disclosure.

**[DETAILED DESCRIPTION OF THE EMBODIMENTS]**

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

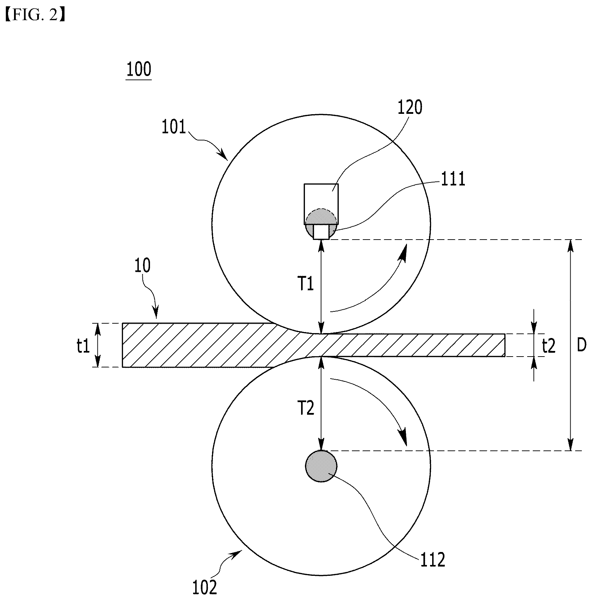

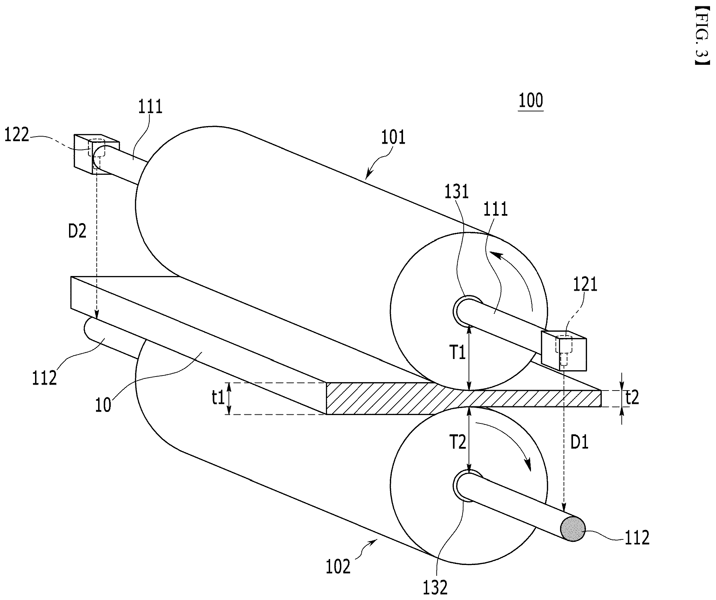

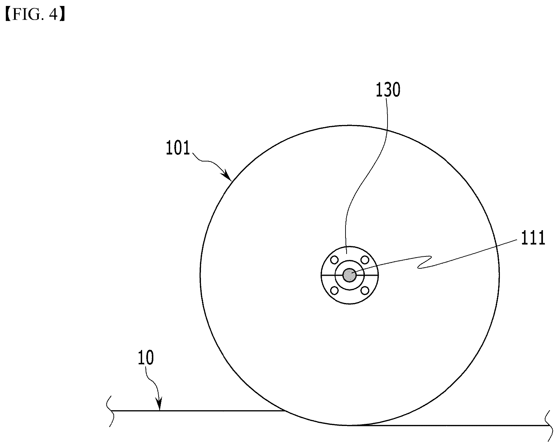

FIG. 2 is a cross-sectional view of a battery cell manufacturing device according to an embodiment of the present disclosure. FIG. 3 is a side view of a first pressure roll of the battery cell manufacturing device shown in FIG. 2. FIG. 4 is a perspective view of the battery cell manufacturing device shown in FIG. 2.

Referring to FIGS. 2 to 4, a battery cell manufacturing device 100 comprises: a first pressure roll 101 that rotates around a first rotation shaft 111, a second pressure roll 102 that forms a rolling interval through which a substrate passes together with the first pressure roll 101, and rotates around a second rotation shaft 112, a first sensor 120 that measures a thickness of a substrate 10 passing between the first pressure roll 101 and the second pressure roll 102, and a second sensor 130 that measures a load of at least one shaft of the first rotation shaft 111 connected to the first pressure roll 101 and the second rotation shaft 112 connected to the second pressure roll 102. Meanwhile, in the figures referenced to in the following description, the first pressure roll 101 and the second pressure roll 102 are depicted as being arranged on a vertical plane, but the arrangement of the first pressure roll 101 and the second pressure roll 102 is not limited to the form shown in the figure. For example, the first pressure roll 101 and the second pressure roll 102 may also be arranged side by side on the same horizontal plane.

The substrate 10 passing between the first pressure roll 101 and the second pressure roll 102 decreases in thickness while passing through the pair of pressure rolls 101 and 102. For example, the substrate 10 before passing through the pair of pressure rolls 101 and 102 has a thickness of t1, but the substrate 10 after passing through the pair of pressure rolls 101 and 102 has a thickness of t2.

The substrate 10 passing through the pair of pressure rolls 101 and 102 may be, for example, an electrode containing an active material. Specifically, the electrode may be one in which an electrode mixture formed by mixing a positive or negative electrode active material, a conductive material and a binder is applied onto one surface or both surfaces of a current collector. However, the type of the substrate 10 is not limited to those set forth above. The substrate 10 can be included in an embodiment of the present disclosure if it is configured to be able to pass between a pair of pressure rolls 101 and 102, and for example, the substrate 10 may be a semi-finished battery product such as a separator, a mono cell, a half-cell, a pouch, and the like.

The first sensor 120 may be a distance measuring sensor that measures the interval D between the first rotation shaft 111 and the second rotation shaft 112 in a noncontact manner.

For example, the distance measuring sensor 120 can measure the interval D by emitting light (e.g., laser or infrared rays) from a light source from one of the first rotation shaft 111 and the second rotation shaft 112 to the other. That is, the distance measuring sensor 120 emits light from a light emitting unit from one of the first rotation shaft 111 and the second rotation shaft 112 to the other and receives the reflected light. The distance measuring sensor 120 measures the amount of light received or the amount of voltage change caused by the received light, so that the interval D between the first rotation shaft 111 and the second rotation shaft 112 can be measured in a noncontact manner.

The thickness t2 of the substrate 10 passing between the first pressure roll 101 and the second pressure roll 102 can be calculated from the interval D between the first rotation shaft 111 and the second rotation shaft 112 measured by the distance measuring sensor 120. For example, the thickness t2 of the substrate 10 passing between the first pressure roll 101 and the second pressure roll 102 can be calculated from a difference between the interval D between the first rotation shaft 111 and the second rotation shaft 112 and a sum of a thickness T1 of the first pressure roll 101 and a thickness T2 of the second pressure roll 102, as in the following Mathematical Equation 1.

[Mathematical Equation 1]

$$t2 = D - (T1 + T2)$$

At this time, the thickness T1 of the first pressure roll 101 and the thickness T2 of the second pressure roll 102 may be measured in advance or may be a numerical value predetermined by the specifications of each of the pressure rolls 101 and 102 themselves.

The distance measuring sensor 120 may be arranged on only one of both side surfaces of the first rotation shaft 111 or the second rotation shaft 112, but is preferably arranged on both side surfaces as shown in FIG. 3. That is, the distance measuring sensor 120 may include a first distance measuring sensor 121 arranged on one side surface of either the first pressure roll 101 or the second pressure roll 102, and a second distance measuring sensor 122 arranged on the other side surface.

Therefore, the first interval D1 between the first rotation shaft 111 and the second rotation shaft 112 is measured by the first distance measuring sensor 121, and the second interval D2 between the first rotation shaft 111 and the second rotation shaft 112 can be measured by the second distance measuring sensor 122. The thickness of the above-mentioned substrate 10 can be calculated by the average value of the first interval D1 and the second interval D2.

In the battery cell manufacturing device according to embodiments of the present disclosure, since a distance measuring sensor 120 is arranged on the rotation shafts 111 and 112 of the pressure rolls 101 and 102, there is no need to add a separate device for measuring the thickness of the substrate 10. Accordingly, the footprint occupied by a separate process equipment can be reduced, and the cost of installing a separate process equipment can also be reduced. Furthermore, since the battery cell manufacturing device according to embodiments of the present disclosure does not directly measure the thickness of the substrate 10, but measures the distance of the rotation shafts 111 and 112 of the press rolls 101 and 102 and converts the thickness of the substrate 10, no error occurs due to the material of the substrate 10, and the error due to vibration occurring according to running of the substrate 10 can be reduced.

Meanwhile, in FIG. 3, for convenience of explanation, the first distance measuring sensor 121 and the second distance measuring sensor 122 are shown as being connected to the two ends of the first rotation shaft 111, respectively, but the first distance measuring sensor 121 and the second distance measuring sensor 122 are structured so as not to be affected by the rotation of the first rotation shaft 111. For example, the battery cell manufacturing device 100 may include a housing that supports the first rotation shaft 111 and the second rotation shaft 112. The first rotation shaft 111 and the second rotation shaft 112 can rotate without affecting the housing during rotation. The first distance measuring sensor 121 and the second distance measuring sensor 122 are arranged in the housing so that the interval D between the first rotation shaft 111 and the second rotation shaft 112 can be measured without being affected by the rotation of the first rotation shaft 111 and the second rotation shaft 112.

The second sensor 130 is a device for measuring information about the load of the rotation shafts 111 and 112 connected to the pressure rolls 101 and 102. The second sensor 130 may be, for example, a load cell, and preferably, the load cell may be a bearing load cell including a bearing and a load cell. The load cell 130 is a type of load detection sensor that uses an elastic body that changes proportionally by an external force and a strain gauge that converts it into an electrical signal. Therefore, the load cell 130 can sense load information, including the size of the load applied to the rotation shafts 111 and 112 of the pressure rolls 101 and 102, the direction of the load applied to the rotation shafts 111 and 112, and the like. However, for the convenience of explanation, the load cell 130 will be described below as sensing the load of the rotation shafts 111 and 112.

The load cell 130 may include a pair of first load cells 131 arranged on both sides of the first rotation shaft 111 of the first pressure roll 101 and a pair of second load cells 132 arranged on both sides of the second rotation shaft 112 of the second pressure roll 102. The load applied to both sides of the first rotation shaft 111 and both sides of the second rotation shaft 112 may be sensed through the pair of first load cells 131 and the pair of second load cells 132, respectively.

The battery cell manufacturing device 100 may comprise a processor (not shown) that compares each of the deviation of the load on both sides of the first rotational shaft 111 measured by a pair of first load cells 131 and the deviation of the load on both sides of the second rotation shaft 112 measured by a pair of second load cells 132 with a predetermined reference value. The processor may include, for example, a micro controller unit(MCU). The processor may be provided inside the battery cell manufacturing device 100, or may be provided separately outside the battery cell manufacturing device 100, thereby capable of remotely communicating with the battery cell manufacturing device 100. The form of the processor may be changed or modified in various ways to adapt to the environment in which the present disclosure is realized.

At this time, the predetermined reference value can be set according to the type of the substrate 10 passing between the first pressure roll 101 and the second pressure roll 102. Furthermore, a deviation of the load on both sides of the first rotation shaft 111 measured by a pair of first load cells 131 can be compared with a first reference value, and a deviation of the load on both sides of the second rotation shaft 112 measured by a pair of second load cells 132 can be compared with a second reference value. At this time, the first reference value and the second reference value can be the same or different from each other.

For example, when the first pressure roll 101 and the second pressure roll 102 are arranged side by side on the same horizontal plane, the deviation of the load on both sides of the first rotation shaft 111 of the first pressure roll 101 and the deviation of the load on both sides of the second rotation shaft 112 of the second pressure roll 102 can be compared with the same reference value.

As another example, when the first pressure roll 101 and the second pressure roll 102 are not arranged on the same horizontal plane (for example, when the first pressure roll 101 and the second pressure roll 102 are arranged on the vertical plane), the load of the first rotation shaft 111 applied to the pair of first load cells 131 and the load of the second rotation shaft 112 applied to the pair of second load cells 132 due to the load of the first pressure roll 101 and the second pressure roll 102 themselves may be different from each other. In such a case, the deviation of the load on both sides of the first rotation shaft 111 of the first pressure roll 101 can be compared with a first reference value, and the deviation of the load on both sides of the second rotation shaft 112 of the second pressure roll 102 can be compared with a second reference value that is different from the first reference value.

When the deviation of each load is equal to or lower than the reference value, the processor can determine that the pressure rolls 101 and 102 are in a normal state. For example, if the deviation of the load of the first rotation shaft 111 and the deviation of the load of the second rotation shaft 112 are equal to or lower than the first reference value and the second reference value, respectively, the processor can determine that the pressure rolls 101 and 102 are in a normal state, and if it is determined that the rolls are in a normal state, the thickness of the substrate 10 can be measured by the first sensor 120.

When the deviation in each load exceeds a reference value, the processor can determine that an abnormality exists in the pressure rolls 101 and 102. For example, the processor can determine that an abnormality exists in the press rolls 101 and 102 in at least one of the following cases: when the deviation of the load of the first rotation shaft 111 exceeds a first reference value, and when the deviation of the load of the second rotation shaft 112 exceeds a second reference value. On the other hand, a detailed example of a case in which it is determined that an abnormality exists in the pressure rolls 101 and 102 will be described later.

If it is determined that an abnormality exists in the pressure rolls 101 and 102, the processor can output an alarm signal and stop the operation of the pressure rolls 101 and 102. At this time, the alarm signal can be output via a speaker (not shown). As another example, the alarm signal can also be output via a display (not shown). However, the alarm signal is not limited to those set forth above, and can be included in the embodiments of the present disclosure as long as it can notify the operator of an abnormality by applying various stimuli such as auditory and visual stimuli. When an abnormality occurs in the pressure rolls 101 and 102, the battery cell manufacturing device 100 outputs an alarm signal and stops the operation of the pressure rolls 101 and 102, thereby allowing an operator to take prompt action.

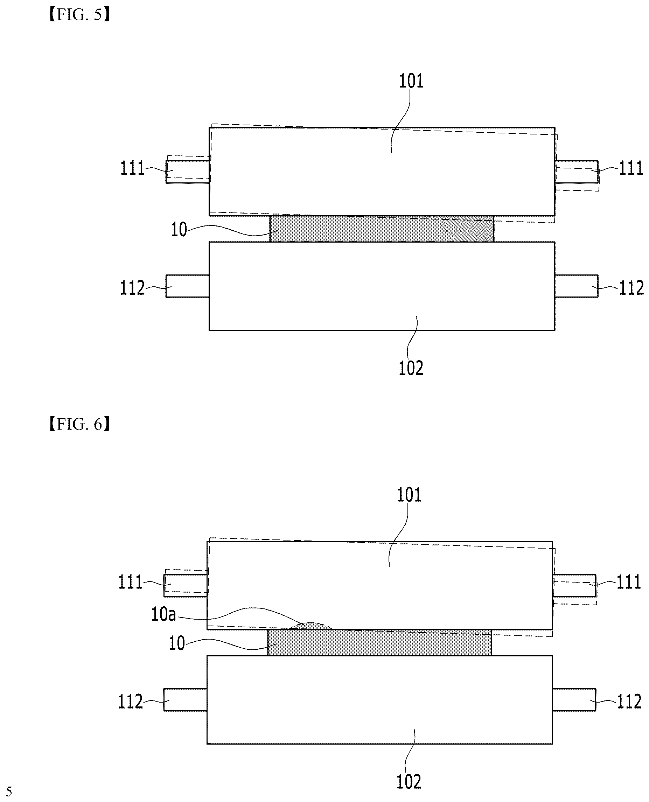

FIG. 5 is a diagram illustrating an example in which an abnormality occurs in the load applied to a rotation shaft connected to a pressure roll. FIG. 6 is a diagram showing another example in which an abnormality occurs in the load applied to a rotation shaft connected to a pressure roll.

Referring to FIG. 5, due to external impact, equipment vibration, etc., a distortion occurs in the first rotation shaft 111 of the first pressure roll 101, so that the first rotation shaft 111 is biased to one side (the right side in the figure). Accordingly, the load applied to the first load cell 131 arranged on the right side of the first rotation shaft 111 may increase, and the load applied to the first load cell 131 arranged on the left side may decrease. If the distortion that occurs in the first pressure roll 101 becomes large, the deviation of the load measured at each of the first load cells 131 arranged on the first pressure roll 101 may exceed a predetermined standard value. In this case, the processor may determine that there an abnormality exists in the first pressure roll 101.

Referring to FIG. 6, it represents a case where a part 10a of the substrate 10 protrudes upward due to reasons such as uneven application of the material to the substrate 10 and thus the thickness of the substrate 10 is uneven. Accordingly, the first pressure roll 101 can receive a force in the opposite direction to the direction in which the first pressure roll 101 presses the substrate 10 on the left side of the first rotation shaft 111. Therefore, the load applied to the first load cell 131 arranged on the right side of the first rotation shaft 111 may increase, and the load applied to the first load cell 131 arranged on the left side may decrease. If the material is unevenly applied onto the substrate 10, the deviation of the load measured from each of the first load cells (131) arranged on the first pressure roll 101 can exceed a predetermined standard value. In this case, the processor can determine that an abnormality exists in the first pressure roll 101.

As described above, when an abnormality occurs in the pressure rolls 101 and 102 and/or the substrate 10, a deviation of a predetermined reference value or more occurs in the load measured from the load cell arranged on the pressure roll where abnormality has occurred among the pair of first load cells 131 and the pair of second load cells 132. Therefore, it is possible to specify the pressure roll where the abnormality has occurred among the first pressure roll 101 and the second pressure roll 102. Furthermore, it is possible to specify a portion where the abnormality has occurred in the substrate 10 through the load distribution of the pressure roll where the abnormality has occurred. As described above, the battery cell manufacturing device 100 according to an embodiment of the present disclosure makes it possible to specify the portion where the abnormality has occurred, thereby allowing an operator to take prompt action.

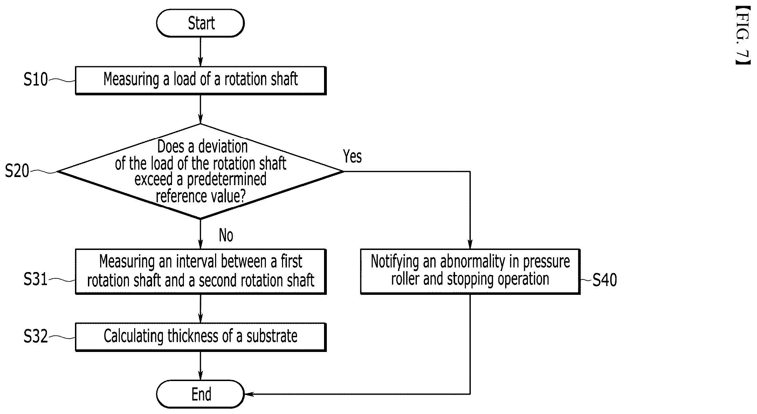

FIG. 7 is a flowchart for explaining a battery cell manufacturing method using a battery cell manufacturing device according to an embodiment of the present disclosure.

The battery cell manufacturing method can be performed using the battery cell manufacturing device 100 described above. However, detailed descriptions of each step of the battery cell manufacturing method described below are omitted because they have been described in the battery cell manufacturing device 100 with reference to FIGS. 2 to 6.

The battery cell manufacturing method may comprise a step S10 of measuring the load of at least one shaft of the first rotation shaft 111 connected to the first pressure roll 101 and the second rotation shaft 112 connected to the second pressure roll 102, a step S20 of determining whether a deviation of the load of at least one rotation shaft is equal to or lower than a predetermined reference value, and a step S30 of measuring the thickness of the substrate 10.

The battery cell manufacturing method may perform a step S30 of measuring the thickness of the substrate 10 if the deviation of the load of at least one rotation shaft is equal to or lower than a predetermined reference value in step S20.

The step S30 of measuring the thickness of the substrate 10 may include a step S31 of measuring an interval between the first rotation shaft 111 and the second rotation shaft 112 and a step S32 of calculating the thickness of the substrate 10 based on the interval between the first rotation shaft 111 and the second rotation shaft 112.

In step S32, the thickness of the substrate 10 can be calculated from a difference between an interval between the first rotation shaft 111 and the second rotation shaft 112 and a sum of a thickness of the first pressure roll 101 and a thickness of the second pressure roll 102.

Furthermore, if the deviation of the load of at least one rotation shaft exceeds a predetermined reference value in step S20, the battery cell manufacturing method may include a step S40 of outputting an alarm signal indicating that an abnormality exists in the pressure rolls 101 and 102 and stopping the operation of the pressure rolls 101 and 102.

As described above, the battery cell manufacturing method according to an embodiment of the present disclosure can sense the occurrence of an abnormality in the pressure rolls 101 and 102 because it measures the deviation of the load of the rotation shafts 111 and 112 of the pressure rolls 101 and 102 during the battery cell manufacturing process. That is, the battery cell manufacturing method according to an embodiment of the present disclosure can improve the reliability of the thickness measurement of the substrate because the thickness of the substrate is measured after determining whether or not an abnormality occurs in the condition of the pressure roll and/or the substrate.

Although the invention has been described in detail above with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

[Description of Reference Numerals]

| 10: | electrode |
|---|---|
| 100: | battery cell manufacturing device |
| 101, 102: | first pressure roll, second pressure roll |
| 111, 112: | first rotation shaft, second rotation shaft |
| 121, 122: | first sensor (first distance measuring sensor, second distance measuring sensor) |
| 131, 132: | second sensor (first load cell, second load cell) |

**Claims**

1. A battery cell manufacturing device comprising:

   a first pressure roll that rotates around a first rotation shaft;
   a second pressure roll that forms a rolling interval through which a substrate passes together with the first pressure roll, and rotates around a second rotation shaft;
   a first sensor that measures a thickness of the substrate passing between the first pressure roll and the second pressure roll; and
   a second sensor that measures a load of at least one shaft of the first rotation shaft connected to the first pressure roll and the second rotation shaft connected to the second pressure roll.

2. The battery cell manufacturing device according to claim 1, wherein:
   the thickness of the substrate is calculated from a difference between an interval between the first rotation shaft and the second rotation shaft and a sum of a thickness of the first pressure roll and a thickness of the second pressure roll.

3. The battery cell manufacturing device according to claim 2, wherein:
   the first sensor is a distance measuring sensor that measures the interval between the first rotation shaft and the second rotation shaft in a noncontact manner.

4. The battery cell manufacturing device according to claim 3, wherein:

   the distance measuring sensor comprises a first distance measuring sensor arranged on one side of any one of the first pressure roll and the second pressure roll, and a second distance measuring sensor arranged on the other side thereof,
   wherein a first interval between the first rotation shaft and the second rotation shaft is measured by the first distance measuring sensor, and a second interval between the first rotation shaft and the second rotation shaft is measured by the second distance measuring sensor, and
   the thickness of the substrate is calculated by an average value of the first interval and the second interval.

5. The battery cell manufacturing device according to claim 1, wherein:
   the second sensor is a load cell that measures the load of the rotation shaft connected to the pressure roll.

6. The battery cell manufacturing device according to claim 5, wherein:
   the load cell comprises a pair of first load cells each arranged on both sides of the first rotation shaft of the first pressure roll, and a pair of second load cells each arranged on both sides of the second rotation shaft of the second pressure roll.

7. The battery cell manufacturing device according to claim 6, further comprising a processor that:

   compares a deviation of the load on both sides of the first rotation shaft measured by the pair of first load cells with a first reference value, and compares a deviation of the load on both sides of the second rotation shaft measured by the pair of second load cells with a second reference value.

8. The battery cell manufacturing device according to claim 7, wherein:
   the first reference value and the second reference value are different from each other.

9. The battery cell manufacturing device according to claim 7, wherein:
   the processor measures the thickness of the substrate by the first sensor, when the deviation of the load of the first rotation shaft and the deviation of the load of the second rotation shaft are respectively equal to or lower than the first reference value and the second reference value.

10. The battery cell manufacturing device according to claim 7, wherein:
the processor determines that an abnormality exists in the pressure roll in at least one of the following cases: when the deviation of the load of the first rotation shaft exceeds the first reference value, and when the deviation of the load of the second rotation shaft exceeds the second reference value.

11. The battery cell manufacturing device according to claim 10, wherein:
the processor outputs an alarm signal when it is determined that an abnormality exists in the pressure roll, and stops the operation of the pressure roll.

12. The battery cell manufacturing device according to claim 1, wherein:
the substrate comprises a current collector and an active material applied on one surface or both surfaces of the current collector.

13. A battery cell manufacturing method using a battery cell manufacturing device which comprises: a first pressure roll that rotates around a first rotation shaft, and a second pressure roll that forms a rolling interval through which a substrate passes together with the first pressure roll, and rotates around a second rotation shaft, the method comprising the steps of:

measuring a load of at least one of the first rotation shaft connected to the first pressure roll and the second rotation shaft connected to the second pressure roll, and
measuring a thickness of the substrate,

14. The battery cell manufacturing method according to claim 13, further comprising:
comparing a deviation of the load of the at least one rotation shaft with a predetermined reference value after measuring the load of the at least one rotation shaft.

15. The battery cell manufacturing method according to claim 14, further comprising:
measuring the load on both sides of the at least one rotation shaft.

16. The battery cell manufacturing method according to claim 14, further comprising:
outputting an alarm signal indicating that an abnormality exists in the pressure roll and stopping the operation of the pressure roll, when the deviation of the load of the at least one rotation shafts exceeds the predetermined reference value.

17. The battery cell manufacturing method according to claim 14, further comprising:
performing the step of measuring the thickness of the substrate when the deviation is equal to or lower than the predetermined reference value.

18. The battery cell manufacturing method according to claim 17, wherein:

the step of measuring the thickness of the substrate comprises,
measuring an interval between the first rotation shaft and the second rotation shaft; and
calculating the thickness of the substrate from a difference between an interval between the first rotation shaft and the second rotation shaft and a sum of a thickness of the first pressure roll and a thickness of the second pressure roll.

【FIG. 1】

【FIG. 2】

【FIG. 3】

【FIG. 4】

【FIG. 5】

【FIG. 6】

[FIG. 7]

EP 4 730 405 A1

```
                    ┌─────────┐
                    │  Start  │
                    └─────────┘
                         │
                         ▼
S10 ─────  ┌──────────────────────────────────┐
           │  Measuring a load of a rotation shaft │
           └──────────────────────────────────┘
                         │
                         ▼
S20 ─────        ╱ Does a deviation ╲                    Yes
              ╱ of the load of the rotation shaft ╲ ──────────┐
              ╲ exceed a predetermined ╱                      │
                ╲ reference value? ╱                          │
                         │ No                                 │
                         ▼                                    ▼
S31 ─── ┌──────────────────────────────┐   ┌──────────────────────────────┐
        │ Measuring an interval between a first │   │ Notifying an abnormality in pressure │ ─S40
        │ rotation shaft and a second rotation shaft │   │ roller and stopping operation │
        └──────────────────────────────┘   └──────────────────────────────┘
                         │                                    │
                         ▼                                    │
S32 ─── ┌──────────────────────────────┐                     │
        │ Calculating thickness of a substrate │             │
        └──────────────────────────────┘                     │
                         │                                    │
                         ▼                                    │
                    ┌─────────┐                               │
                    │   End   │ ◄─────────────────────────────┘
                    └─────────┘
```

## INTERNATIONAL SEARCH REPORT

| International application No. |
| --- |
| **PCT/KR2024/012715** |

**A.     CLASSIFICATION OF SUBJECT MATTER**

**H01M 4/04**(2006.01)i; **G01B 21/16**(2006.01)i; **G01L 1/22**(2006.01)i

According to International Patent Classification (IPC) or to both national classification and IPC

**B.      FIELDS SEARCHED**

Minimum documentation searched (classification system followed by classification symbols)

H01M 4/04(2006.01); B05C 1/02(2006.01); B21B 37/00(2006.01); B21B 37/16(2006.01); B21B 37/38(2006.01); B21B 38/10(2006.01); B42C 1/00(2006.01); G01B 11/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전지(battery), 전극(electrode), 가압 롤(pressing roll), 두께(thickness), 하중(load), 측정(measurement), 센서(sensor), 회전축(shaft), 프로세서(processor)

**C.      DOCUMENTS CONSIDERED TO BE RELEVANT**

| Category* | Citation of document, with indication, where appropriate, of the relevant passages | Relevant to claim No. |
| --- | --- | --- |
| Y | JP 2001-332248 A (TOSHIBA BATTERY CO., LTD.) 30 November 2001 (2001-11-30)<br>See paragraphs [0009]-[0011]; and figures 1 and 2. | 1,5,12,13 |
| A | | 2-4,6-11,14-18 |
| Y | KR 10-2023-0045125 A (LG ENERGY SOLUTION, LTD.) 04 April 2023 (2023-04-04)<br>See claim 1; and figure 3. | 1,5,12,13 |
| A | JP 2000-146535 A (HEIDELBERGER DRUCKMASCHINEN AG) 26 May 2000 (2000-05-26)<br>See paragraphs [0023] and [0024]; and figure 6. | 1-18 |
| A | JP 2016-064441 A (NEC CORP.) 28 April 2016 (2016-04-28)<br>See claims 1-8. | 1-18 |
| A | JP 7316589 B2 (PANASONIC IP MANAGEMENT CO., LTD.) 28 July 2023 (2023-07-28)<br>See claims 1-11. | 1-18 |

☐ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 December 2024** | **06 December 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/012715**

| Patent document cited in search report | | | Publication date (day/month/year) | Patent family member(s) | | | Publication date (day/month/year) |
|---|---|---|---|---|---|---|---|
| JP | 2001-332248 | A | 30 November 2001 | None | | | |
| KR | 10-2023-0045125 | A | 04 April 2023 | None | | | |
| JP | 2000-146535 | A | 26 May 2000 | DE | 19950607 | A1 | 11 May 2000 |
| | | | | EP | 1000890 | A2 | 17 May 2000 |
| | | | | EP | 1000890 | B1 | 02 August 2006 |
| | | | | US | 6189879 | B1 | 20 February 2001 |
| JP | 2016-064441 | A | 28 April 2016 | JP | 6387765 | B2 | 12 September 2018 |
| JP | 7316589 | B2 | 28 July 2023 | CN | 112912185 | A | 04 June 2021 |
| | | | | CN | 112912185 | B | 01 August 2023 |
| | | | | JP | 2021-100561 | A1 | 30 September 2021 |
| | | | | US | 12128466 | B2 | 29 October 2024 |
| | | | | US | 2021-0394246 | A1 | 23 December 2021 |
| | | | | WO | 2020-100561 | A1 | 22 May 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230123278